# EUROPEAN PATENT APPLICATION

(11) **EP 4 787 949 A1**
(43) Date of publication of application: **05.08.2026**
(21) Application number: 23953574.3
(22) Date of filing: 27.09.2023
(51) Int. Cl.: H04W 28/06

(54) **INFORMATION PROCESSING METHOD, TERMINAL, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Gunzelmann, Rainer
(86) International application number: PCT/CN2023/122323
(87) International publication number: WO 2025/065422

(57) **Abstract**

Embodiments of the present disclosure provide an information processing method, a terminal, and a storage medium. The information processing method comprises: a terminal determines a first operation for cancelling a DSR. Therefore, for the DSR to be sent (or having been triggered), the terminal can implement the first operation for cancelling the DSR.

## Description

### FIELD

The present invention relates to the field of communication technology, and in particular to an information processing method, a terminal, and a storage medium.

### BACKGROUND

Currently, for emergency scheduling during data transmission, a terminal may introduce reporting of delay status reporting (DSR). However, in some scenarios, such as packet loss, it is unnecessary to report the DSR.

### SUMMARY

Embodiments of the present invention solve a problem of how to cancel sending of DSR to be sent.

According to a first aspect of embodiments of the present invention, an information processing method is provided, which includes: determining, by a terminal, to cancel a first operation for DSR.

According to a second aspect of embodiments of the present invention, a terminal is provided, which includes: a processing module, configured to determine to cancel a first operation for DSR.

According to a third aspect of embodiments of the present invention, a terminal is provided, which includes one or more processors and is configured to perform optional implementation manners of the first aspect.

According to a fourth aspect of embodiments of the present invention, a storage medium is provided, which has stored therein instructions that, when run on a communication device, cause the communication device to perform the method as described in optional implementation manners of the first aspect.

Embodiments of the present invention enable a terminal to implement cancellation of sending of the DSR to be sent.

### BRIEF DESCRIPTION OF THE DRAWINGS

In order to more clearly illustrate technical solutions in embodiments of the present invention, drawings needed for the description of embodiments will be briefly introduced below. Apparently, the drawings described below involve some embodiments of the present invention and do not impose specific limitations on the protection scope of the present invention.
FIG. 1 is a schematic diagram showing a structure of an information processing system according to embodiments of the present invention.
FIG. 2 is a schematic interactive diagram of an information processing method according to embodiments of the present invention.
FIG. 3A is a schematic flowchart of an information processing method according to embodiments of the present invention.
FIG. 3B is a schematic flowchart of an information processing method according to embodiments of the present invention.
FIG. 3C is a schematic flowchart of an information processing method according to embodiments of the present invention.
FIG. 4A is a schematic block diagram of a network device according to embodiments of the present invention.
FIG. 4B is a schematic block diagram of a terminal according to embodiments of the present invention.
FIG. 5A is a schematic block diagram of a communication device according to embodiments of the present invention.
FIG. 5B is a schematic block diagram of a chip according to embodiments of the present invention.

### DETAILED DESCRIPTION

Embodiments of the present invention provide an information processing method, a terminal, and a storage medium.

In a first aspect, embodiments of the present invention provide an information processing method, which includes: determining, by a terminal, to cancel a first operation for delay status reporting (DSR).

In the above embodiments, for the DSR to be sent (or has been triggered), the terminal may implement cancellation of the first operation for the DSR.

In combination with some embodiments of the first aspect, in some embodiments, determining to cancel the first operation for the DSR includes: determining to cancel the first operation for the DSR based on data packet discarding at a high layer.

In the above embodiments, in a case where data packet discarding occurs at the high layer, there is no need for the terminal to send the DSR to be sent (or has been triggered). For example, sending of the DSR to be sent (or has been triggered) may be cancelled, which can save unnecessary resources.

In combination with some embodiments of the first aspect, in some embodiments, the high layer includes at least one of: a packet data convergence protocol (PDCP) layer; or a radio link control (RLC) layer.

In the above embodiments, the PDCP layer may perform data statistics, and/or the PDCP layer may send part of the data to the RLC layer, so that the RLC layer may perform statistics on the data. In this way, data packet discarding can be detected by the DPCP layer and/or the RLC layer, thereby realizing detection of packet loss by a plurality of entities of the terminal.

In combination with some embodiments of the first aspect, in some embodiments, cancelling the first operation for the DSR includes at least one of: cancelling sending of the DSR; cancelling sending of a scheduling request (SR); or cancelling a random access channel (RACH) procedure.

In the above embodiments, cancelling sending of the DSR, cancelling sending of the SR, or cancelling the RACH procedure may be achieved by the terminal, thereby reducing the unnecessary waste of resources.

In combination with some embodiments of the first aspect, in some embodiments, cancelling the first operation for the DSR includes at least one of: cancelling sending of a scheduling request (SR) in case of cancelling sending of the DSR; or cancelling a random access channel (RACH) procedure in case of cancelling sending of the DSR.

In the above embodiments, cancelling the SR and/or cancelling the RACH procedure in case of cancelling the DSR may be achieved by the terminal. In this way, after the DSR is canceled, it is unnecessary to send the SR which is triggered by failed sending of the DSR and/or it is unnecessary to trigger the RACH procedure which will be triggered by failed sending of the SR, thereby reducing the unnecessary waste of resources.

In combination with some embodiments of the first aspect, in some embodiments, the method further includes: stopping a prohibit timer of the SR when cancelling sending of the SR; and/or stopping a timer associated with the DSR when cancelling sending of the DSR.

In the above embodiments, the terminal may stop the timer of the SR when canceling the SR, so that there is no need to resend the SR based on the timer of the SR in a case where sending of the SR fails, thereby saving system resources; and/or the terminal may stop the timer associated with the DSR when canceling the DSR, for example, there is no need to run the timer associated with the DSR when canceling the DSR, thereby saving system resources.

In combination with some embodiments of the first aspect, in some embodiments, the method further includes: determining the data packet discarding at the high layer.

In the above embodiments, the terminal may detect whether the data packet is discarded through the high layer.

In combination with some embodiments of the first aspect, in some embodiments, determining the data packet discarding at the high layer includes: determining the data packet discarding at the high layer according to an inter-layer message, and the inter-layer message is sent by the high layer to a media access control (MAC) layer.

In the above embodiments, the terminal can detect and inform the MAC layer of the data packet discarding through the high layer, so as to facilitate the terminal to cancel sending of the DSR to be sent.

In combination with some embodiments of the first aspect, in some embodiments, the inter-layer message is sent after the data packet discarding at the high layer.

In the above embodiments, the terminal may send the inter-layer message to the MAC layer through the high layer after packet loss occurs at the high layer, so that the high layer may promptly notify the MAC layer of the data packet discarding.

In combination with some embodiments of the first aspect, in some embodiments, determining the data packet discarding at the high layer includes at least one of: detecting through an MAC layer that data to be transmitted or first characteristic data of a specific logical channel is discarded; or detecting through an MAC layer that data to be transmitted or first characteristic data of a specific logical channel group is discarded.

In the above embodiments, the terminal may detect the data packet discarding at the high layer through the MAC layer, thereby providing more ways to detect data discarding.

In combination with some embodiments of the first aspect, in some embodiments, determining to cancel the first operation for the DSR based on the data packet discarding at the high layer includes: determining, according to a protocol, that a function of data packet discarding is enabled for a logic channel corresponding to the high layer, and cancelling the first operation for the DSR when the data packet discarding at the high layer is detected.

In the above embodiments, in a case where the terminal determines that the function of data packet discarding is enabled for the logic channel, the terminal cancels the first operation for the DSR when the data packet discarding at the high layer is detected. In this way, it is possible to perform operations of cancelling the DSR and/or SR and/or RACH procedure for the specific logical channel for which that data packet discarding is enabled.

In a second aspect, embodiments of the present invention provide a terminal, which includes: a processing module, configured to determine to cancel a first operation for DSR.

In a third aspect, embodiments of the present invention provide a terminal, which includes one or more processors and configured to perform optional implementation manners of the first aspect.

In a fourth aspect, embodiments of the present invention provide a storage medium, which has stored therein instructions that, when run on a communication device, cause the communication device to perform the method as described in the optional implementation manners of the first aspect.

In a fifth aspect, embodiments of the present invention provide a program product that, when executed by a communication device, causes the communication device to perform the method as described in the optional implementation manners of the first aspect.

In a sixth aspect, embodiments of the present invention provide a computer program that, when run on a computer, causes the computer to perform the information processing method as described in optional implementation manners of the first aspect.

In a seventh aspect, embodiments of the present invention provide a chip or a chip system; the chip or the chip system includes a processing circuit configured to perform the method as described in optional implementation manners of the first aspect.

It is understandable that the above-mentioned network device, terminal, communication system, storage medium, program product, computer program, chip or chip system are all used to perform the method provided in embodiments of the present invention. Therefore, the beneficial effects achievable by them can refer to the beneficial effects in the corresponding methods, which will not be repeated here.

Embodiments of the present invention provide an information processing method, a terminal and a storage medium. In some embodiments, the terms "information processing method" and "communication method" are interchangeable, the terms "information processing device" and "communication device" are interchangeable, and the terms "information processing system" and "communication system" are interchangeable.

Embodiments of the present invention are not exhaustive, but are examples of some embodiments, and are not intended to constitute a limitation on the scope of protection of the present invention. In the absence of contradiction, each step in a certain embodiment may be implemented as an independent embodiment, and various steps may be arbitrarily combined. For example, a solution obtained after removing one or more steps from a certain embodiment may also be implemented as an independent embodiment, and steps in a certain embodiment may be arbitrarily exchanged in order. In addition, optional implementation manners in a certain embodiment may be arbitrarily combined. In addition, various embodiments may be arbitrarily combined, for example, some or all of the steps of different embodiments may be arbitrarily combined, and a certain embodiment may be arbitrarily combined with optional implementation manners of other embodiments.

In various embodiments of the present invention, unless specified otherwise or there is a logical conflict, terms and/or descriptions among various embodiments are of consistency and may be referenced to each other, and technical features in different embodiments may be combined to form a new embodiment based on their internal logical relationships.

Terms used in embodiments of the present invention are for the purpose of describing specific embodiments and are not intended to limit the present invention.

In embodiments of the present invention, unless specified otherwise, an element expressed in the singular form, such as expressed with words like "a", "an", "the", "described above", "said", "aforementioned", "this", etc., may mean "one and only one", or mean "one or more", "at least one", etc. For example, a noun after an article like "a", "an", "the" in English may be understood as a singular expression or a plural expression.

In embodiments of the present invention, "a plurality of" refers to two or more.

In some embodiments, phrases like "at least one of", "one or more", "a plurality of", "multiple", etc. may be used interchangeably.

In some embodiments, expressions like "at least one of A or B", "A and/or B", "A in a case, B in another case", "A in response to a case, B in response to another case", etc., may include the following technical solutions depending on situations: A in some embodiments (A is performed independently of B); B in some embodiments (B is performed independently of A); in some embodiments, selection is made from A and B (A and B are selectively performed); both A and B in some embodiments (both A and B are performed). The same applies when there are more branches such as A, B, and C.

In some embodiments, the expression "A or B" may include the following technical solutions depending on situations: in some embodiments, A (A is performed independently of B); in some embodiments, B (B is performed independently of A); in some embodiments, selection is made from A and B (A and B are selectively performed). The same applies when there are more branches such as A, B, and C.

The prefixes such as "first" and "second" in embodiments of the present invention are used to distinguish different objects described, and do not constitute restrictions on the position, order, priority, quantity or content of the described objects. The statement for the described objects refers to the description in the context of the claims or embodiments, and the use of prefixes should not bring unnecessary restrictions. For example, if the described objects are "fields", such as "first field" and "second field", the ordinal numbers, i.e., "first" and "second", before these "fields" do not limit positions or order of these "fields", and the "first" and "second" do not limit whether the "fields" they define are in the same message, nor do they limit the order of the "first field" and the "second field". For another example, if the described objects are "levels", such as "first level" and "second level", the ordinal numbers before these "levels" do not limit the priority between these "levels". For another example, the number of the described object is not limited by the ordinal number, the number of the described object may be one or more. Taking "first apparatus" as an example, the number of the "apparatus" may be one or more. In addition, the objects defined by different prefixes may be the same or different. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their contents may be the same or different.

In some embodiments, "including A", "comprising A", "used to indicate A", and "carrying A" may be interpreted as "directly carrying A" or "indirectly indicating A".

In some embodiments, phrases such as "in response to...", "in response to determining...", "in case of...", "upon...", "when...", "if...", etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "smaller than", "smaller than or equal to", "not greater than", "less than", "less than or equal to", "no more than", "lower than", "lower than or equal to", "not higher than", and "below" may be replaced with each other.

In some embodiments, apparatuses or the like may be interpreted as physical or virtual, and their names are not limited to those recorded in embodiments. Terms such as "apparatus", "equipment", "device", "circuit", "network element", "node", "function", "unit", "section", "system", "network", "chip", "chip system", "entity", and "body" may be used interchangeably.

In some embodiments, "network" may be interpreted as a device included in the network (for example, access network device, core network device, etc.)

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel (panel)", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, terms such as "terminal", "terminal device", "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, the communication between a terminal and an access network device, a core network device or a network device may be replaced by the communication structure among terminals (may also be referred to as for example device-to-device (D2D), vehicle-to-everything (V2X), etc.), which may also apply various embodiments of the present invention. In this case, a structure may be set in which the terminal has all or part of functions of the access network device. In addition, terms such as "uplink" and "downlink" may also be replaced by a term (e.g., "side") corresponding to the communication among terminals. For example, an uplink channel, a downlink channel, etc. may be replaced by a side channel, and an uplink, a downlink, etc. may be replaced by a sidelink.

In some embodiments, a terminal may be replaced by an access network device, a core network device, or a network device. In this case, a structure may be set in which the access network device, the core network device, or the network device has all or part of functions of the terminal.

In some embodiments, acquisition of data, information, etc. may comply with the laws and regulations of the country where the activity takes place.

In some embodiments, data, information, etc. may be obtained with the user's consent.

In addition, each element, each row, or each column in the table of embodiments of the present invention may be implemented as an independent embodiment, and the combination of any element, any row, and/or any column may also be implemented as an independent embodiment.

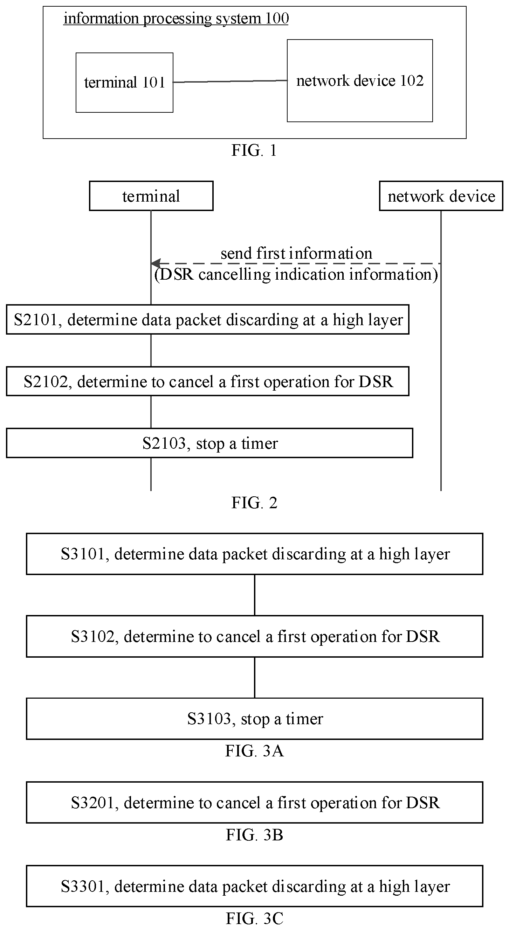

FIG. 1 is a schematic diagram showing a structure of an information processing system 100 according to embodiments of the present invention. As shown in FIG. 1, the information processing system 100 may include a terminal 101 and a network device 102.

In some embodiments, the network device 102 may include at least one of: an access network device, or a core network device.

In some embodiments, the terminal 101 includes, for example, at least one of a mobile phone, a wearable device, an Internet of Things (IOT) device or terminal, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in a smart home, but is not limited thereto.

In some embodiments, the access network device is for example a node or device that connects a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), or a cloud base station (Cloud RAN), a base station in other communication systems, or an access node in a wireless fidelity (Wi-Fi) system, but is not limited thereto.

In some embodiments, the technical solutions of the present invention are applicable to the Open RAN architecture. In this case, interfaces between access network devices or within an access network device involved in embodiments of the present invention may be internal interfaces of the Open RAN, and the processes and information exchange between these internal interfaces can be implemented through software or programs.

In some embodiments, the access network device may be composed of a central unit

(CU) and distributed units (DUs), where the CU may also be referred to as a control unit. The CU-DU structure allows to split protocol layers of the access network device, functions of some protocol layers are set in the CU for centralized control, functions of some or all of the remaining protocol layers are distributed in DUs, and the DUs are centrally controlled by the CU, but the present invention is not limited thereto.

In some embodiments, the core network device may be one device, including a first network element, a second network element, etc., or may include a plurality of devices or a group of devices, each including all or part of the above first network element and second network element. The network element may be virtual or physical. The core network may include, for example, at least one of an Evolved Packet Core (EPC), a 5G Core Network (5GCN), and a Next Generation Core (NGC).

It may be understood that the information processing system described in embodiments of the present invention is for the purpose of more clearly illustrating the technical solutions of embodiments of the present invention, and does not constitute a limitation on the technical solutions proposed in embodiments of the present invention. A person of ordinary skill in the art knows that with the evolution of the system architecture and the emergence of new service scenarios, the technical solutions proposed in embodiments of the present invention are also applicable to similar technical problems.

The following embodiments of the present invention may be applied to the information processing system 100 or some of entities shown in FIG. 1, but are not limited thereto. The entities shown in FIG. 1 are examples, and the information processing system may include all or part of the entities in FIG. 1, or may include other entities not shown in FIG. 1, the number and form of each kind of entity are arbitrary, the connection relationship among various entities is an example, and these entities may be connected or disconnected with each other, and the connection may be in any manner, either a direct connection or an indirect connection, or either a wired connection or a wireless connection.

Various embodiments of the present invention may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems expanded based thereon, etc. In addition, multiple systems may also be combined (for example, a combination of LTE or LTE-A and 5G) for application.

In some embodiments, in an extended reality (XR) service, there are usually multiple data flows, and its business amount is very large. The XR data flows need to meet a certain delay requirement during transmission, especially some data flows need to arrive at a server at the same time for decoding. The delay of any of the data flows will cause joint decoding of multiple data flows to fail. However, the scheduling of a network device is dynamic; so in some cases, even if some data flows belong to a low-priority logical channel, if some data packets have not been scheduled for a long time, a buffer status report (BSR) needs to be sent to notify the network device as soon as possible. However, at present, BSR can only be sent when high-priority logical channel data arrives, which cannot meet the needs of emergency scheduling. Therefore, optimization for the emergency scheduling situation in XR needs to be considered.

In some embodiments, reporting of DSR is introduced. Optionally, the terminal reports the DSR, and the DSR includes delay information; the delay information may be that a data packet cannot be scheduled for a long time, resulting in that remaining time of the data packet is less than a certain threshold. Optionally, the remaining time of the data packet is a time until the packet is discarded, that is, the remaining time is determined according to a discard timer of a packet data convergence protocol (PDCP). Optionally, the threshold may be a remaining time threshold.

In some embodiments, the terminal supports threshold-based DSR reporting; for example, the DSR reporting is triggered when the remaining time of a protocol data unit (PDU)/PDU set is below a network (NW) configured threshold. Optionally, the threshold is configured per logical channel group (LCG).

In some embodiments, a DSR procedure is used to provide a serving base station (e.g., gNB) with delay status of UL data. This DSR includes remaining time of the UL data, which is derived according to a value of a PDCP discard timer as well as the amount of data with the reported remaining time, and the PDCP discard timer is associated with a first symbol of physical uplink shared channel (PUSCH) transmission in which the DSR is sent.

In some embodiments, RRC controls a DSR operation by configuring a remaining time threshold; and the remaining time threshold is a threshold on remaining time of UL data configured for triggering DSR for an LCG.

In some embodiments, an MAC entity triggers sending of a DSR when the remaining time of a PDU/PDU set in an LCG, if configured for DSR, becomes shorter than its associated remaining time threshold.

In some embodiments, there is no need to report the DSR due to packet loss at a PDCP layer. For example, assuming that in a logical channel, a newly arrived data packet cannot be scheduled in time, so DSR is triggered; but because the discard timer expires, data is discarded in batches at the PDCP layer, so the triggered DSR is no longer needed to send. For example, because the network deactivates reporting of DSR, a triggered DSR is no longer needed to send in this case. Therefore, it needs to consider a mechanism for canceling the triggered DSR.

FIG. 2 is a schematic interactive diagram of an information processing method according to embodiments of the present invention. As shown in FIG. 2, embodiments of the present invention relate to an information processing method for an information processing system 100, and the method includes the following steps.

In step S2101, a terminal determines data packet discarding at a high layer.

Optionally, the terminal determines batch discarding of data packets at the high layer. For example, the terminal detects batch discarding of data packets and/or sets of data packets at the high layer.

Optionally, the data packet may be a PDU; and the set of data packet may be a PDU set.

Optionally, the high layer may be a PDCP layer or an RLC layer.

In some embodiments, the terminal determines the data packet discarding at the high layer according to a high-layer notification, or the terminal acquires the data packet discarding at the high layer based on an MAC layer.

In some embodiments, the terminal determines the data packet discarding at the high layer according to an inter-layer message sent by the high layer to the MAC layer.

Optionally, the inter-layer message indicates that data to be transmitted or first characteristic data is discarded; and the first characteristic data is a subset or a part of the data to be transmitted.

For example, the inter-layer message indicates that data to be transmitted of a specific logical channel is discarded or first characteristic data of a specific logical channel is discarded. For example, the specific logical channel is a logical channel configured with a function of data packet discarding. For example, the specific logical channel is any logical channel.

Optionally, the data packet discarding may mean that a data packet changes from presence to absence at the high layer.

Optionally, the name of the inter-layer message is not limited, and it may be, for example, packet loss indication information.

Optionally, the inter-layer message is sent after the data packet discarding at the high layer. For example, after packet loss occurs at the high layer, the terminal sends the inter-layer message to the MAC layer through the high layer.

In some embodiments, it is detected through the MAC layer that data to be transmitted or first characteristic data of a specific logical channel is discarded.

In some embodiments, it is detected through the MAC layer that data to be transmitted or first characteristic data of a specific logical channel group is discarded. Optionally, a logical channel group includes at least one logical channel; a specific logical channel group includes at least one specific logical channel. Optionally, the MAC layer may detect that data to be transmitted or first characteristic data of at least one logical channel or at least one logical channel group is discarded.

For example, the specific logical channel (or specific logical channel group) may be a logical channel (or logical channel group) for which DSR is triggered, or the specific logical channel (or specific logical channel group) may be a logical channel (or logical channel group) for which the function of data packet discarding is enabled, or the specific logical channel (or specific logical channel group) may be any logical channel (or logical channel group), etc.

In step S2102, the terminal determines to cancel a first operation for the DSR.

Optionally, the DSR includes a data volume and/or time information of the first characteristic data. For example, the first characteristic data is a subset of data to be transmitted in the terminal; or the first characteristic data is a subset of data to be transmitted in the logical channel or logical channel group; or the first characteristic data is a part of data to be transmitted. For example, the time information indicates the time until the data to be transmitted is discarded.

In some embodiments, the terminal determines to cancel the first operation for the DSR based on the data packet discarding at the high layer. Optionally, the terminal determines to cancel the first operation for the DSR when detecting the data packet discarding at the high layer.

In some embodiments, cancelling the first operation for the DSR includes at least one of: cancelling sending of the DSR; cancelling sending of a scheduling request (SR); or cancelling a random access channel (RACH) procedure.

In some embodiments, the terminal determines to cancel sending of the DSR based on the data packet discarding at the high layer. Optionally, the terminal determines to cancel sending of the DSR when detecting the data packet discarding at the high layer.

In some embodiments, the terminal determines to cancel sending of the SR based on the data packet discarding at the high layer. Optionally, the terminal determines to cancel sending of the SR when detecting the data packet discarding at the high layer.

In some embodiments, the terminal determines to cancel the RACH procedure based on the data packet discarding at the high layer. Optionally, the terminal determines to cancel the RACH procedure when detecting the data packet discarding at the high layer.

In some embodiments, cancelling the first operation for the DSR includes at least one of: cancelling sending of the SR in case of cancelling sending of the DSR; or cancelling the RACH procedure in case of cancelling sending of the DSR.

In some embodiments, the terminal determines to cancel sending of the SR in case of cancelling sending of the DSR based on the data packet discarding at the high layer. Optionally, the terminal detects the data packet discarding at the high layer, and determines to cancel sending of the SR in case of cancelling sending of the DSR.

In some embodiments, the terminal determines to cancel the RACH procedure in case of cancelling sending of the DSR based on the data packet discarding at the high layer. Optionally, the terminal detects the data packet discarding at the high layer, and determines to cancel the RACH procedure in case of cancelling sending of the DSR.

Optionally, if the terminal determines that data of a first logical channel is unavailable, it determines to cancel sending of the DSR. Optionally, the first logical channel may be any logical channel or the specific logical channel mentioned in previous embodiments. Optionally, canceling sending of the DSR means canceling sending the DSR. Optionally, the data of the first logical channel is unavailable, which may be that: the data packet is discarded at the high layer.

Optionally, if the terminal determines that there is no uplink granted resource for uplink transmission, or that there is an uplink granted resource, but a logical channel multiplexing rule is not satisfied, resulting in failure of the MAC CE transmission for the DSR, the DSR will trigger sending of the SR. Here, if the terminal cancels sending of the DSR, it is determined to cancel sending of the SR. The SR may be a triggered SR or a pending SR. Canceling sending of the SR means canceling sending the SR.

Optionally, if the terminal determines that sending of the SR fails, it needs to trigger the RACH procedure. Here, if the terminal cancels sending of the SR, it determines to cancel the RACH procedure. Optionally, the terminal determines that sending of the SR fails, which may be that: the terminal determines that there is no valid physical uplink control channel (PUCCH) for sending the SR.

Optionally, each logical channel may trigger sending of a DSR and/or a SR; canceling sending of the DSR and/or the SR may be canceling sending of all DSRs and/or SRs or canceling sending of a part of DSRs and/or SRs. For example, canceling sending of a part of DSRs includes: canceling sending of a DSR of a corresponding logical channel for which the DSR is triggered or a logical channel group to which the corresponding logical channel belongs. For example, canceling sending of a part of SRs includes: canceling sending of an SR of a corresponding logical channel for which a DSR or SR is triggered or a logical channel group to which the corresponding logical channel belongs. Optionally, the logical channel or the logical channel group to which the logical channel belongs is configured by a network device to deactivate the reporting or sending function of the DSR.

In some embodiments, the terminal determines, according to a protocol, that a function of data packet discarding is enabled for a logic channel corresponding to the high layer, and cancels the first operation for the DSR when the data packet discarding at the high layer is detected.

Optionally, the protocol stipulates, for at least one logical channel, whether the function of data packet discarding is enabled. Here, the logical channel for which the function of data packet discarding is enabled may be a specific logical channel.

Optionally, the terminal determines that the function of data packet discarding is enabled for the logic channel corresponding to the high layer, and cancels sending of the DSR when the data packet discarding at the high layer is detected.

Optionally, the terminal determines that the function of data packet discarding is enabled for the logic channel corresponding to the high layer, and cancels the sending of the SR when the data packet discarding at the high layer is detected.

Optionally, the terminal determines that the function of data packet discarding is enabled for the logic channel corresponding to the high layer, and cancels the RACH procedure when the data packet discarding at the high layer is detected.

In step S2103, the terminal stops a timer.

In some embodiments, when canceling sending of the SR, the terminal stops a prohibit timer of the SR. Optionally, stopping the prohibit timer of the SR may be canceling the prohibit timer of the SR.

In some embodiments, when the terminal cancels sending of the DSR, it stops a timer associated with the DSR. Optionally, the timer associated with the DSR includes at least one of: a prohibit timer, a retransmission timer, or a periodic timer.

Optionally, the prohibit timer and/or the retransmission timer are used for data retransmission. For example, the terminal may retransmit the SR based on the retransmission timer. For example, if the terminal determines that the SR needs to be retransmitted after the SR is sent, it determines to retransmit the SR after the prohibit timer of the SR expires.

Optionally, the periodic timer is used for periodical data transmission. For example, the terminal retransmits the SR based on a predetermined time interval, and the predetermined time interval is a period of the periodic timer.

In some optional embodiments, the network device sends first information to the terminal.

In some optional embodiments, the terminal receives the first information sent by the network device.

In some embodiments, the network device sends the first information to the terminal via a dedicated signaling. Optionally, the dedicated signaling may be an RRC signaling, a MAC CE, etc.

In some embodiments, the terminal receives the first information sent by the network device via the dedicated signaling.

Optionally, the network device sends a first RRC signaling to the terminal, and the first RRC signaling includes the first information.

Optionally, the network device sends the MAC CE to the terminal, and the MAC CE includes the first information.

Optionally, the terminal receives the first RRC signaling sent by the network device, and the first RRC signaling includes the first information.

Optionally, the terminal receives the MAC CE sent by the network device, and the MAC CE includes the first information.

Optionally, the first information is used to instruct the terminal to cancel the first operation for the DSR when it determines the data packet discarding at the high layer. For example, the first information is used to instruct the terminal to perform at least one of: cancel sending of the DSR when the data packet discarding at the high layer is detected; cancel sending of the SR when the data packet discarding at the high layer is detected; or cancel the RACH procedure when the data packet discarding at the high layer is detected.

Optionally, the first information is used by the terminal to determine to cancel the first operation for the DSR in a case where the data packet discarding occurs at the high layer.

Optionally, the name of the first information is not limited, and it may be, for example, DSR cancelling indication information, DSR cancelling configuration information, etc.

In some optional embodiments, the network device sends configuration information to the terminal.

Optionally, the configuration information is used for the terminal to send the DSR.

Optionally, the configuration information is used to instruct the terminal to send the DSR.

Optionally, the name of the configuration information is not limited, and it may be, for example, DSR reporting configuration, DSR reporting indication, etc.

Optionally, after the network device sends the configuration information via a second RRC signaling, it sends the first information via the MAC CE.

Optionally, the first information is used to instruct to: activate a reporting or sending function of the DSR, or deactivate the reporting or sending function of the DSR. Optionally, activation may mean configuring and/or enabling; deactivation may mean de-configuring, releasing and/or disabling.

In some embodiments, names of information or the like are not limited to those recorded in embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" may be used interchangeably.

In some embodiments, terms such as "obtain", "acquire", "get", "receive", "transmission", "bidirectional transmission", "send and/or receive" are interchangeable, which may be interpreted as receiving from other entities, obtaining from a protocol, obtaining from a high layer, obtaining by self-processing, autonomous implementation, etc.

In some embodiments, terms such as "send", "emit", "report", "issue", "transmission", "bidirectional transmission", "send and/or receive" may be used interchangeably.

In some embodiments, terms such as "specific", "preset", "predetermine", "set", "indicated", "certain", "any", and "first" may be used interchangeably, and expressions like "specific A", "preset A", "predetermined A", "set A", "indicated A", "certain A", "any A", and "first A" may be interpreted as A pre-defined in a protocol, or A obtained through setting, configuration, or indication, etc., or may be interpreted as specific A, certain A, any A, or first A, etc., but is not limited thereto.

In some embodiments, determination or judgment may be made by virtue of a value represented by 1 bit (0 or 1), or by virtue of a true or false value (Boolean value), or may also be made by comparison of numerical values (for example, comparison with a predetermined value), but is not limited thereto.

The information processing method involved in embodiments of the present invention may include at least one of the steps S2101 to S2103. For example, the step S2101 may be implemented as an independent embodiment; the step S2102 may be implemented as an independent embodiment; the step S2103 may be implemented as an independent embodiment; the combination of the step S2101 and the step S2102 may be implemented as an independent embodiment; the combination of the step S2102 and the step S2103 may be implemented as an independent embodiment; the combination of the step S2102 to the step S2103 may be implemented as an independent embodiment.

In some embodiments, the step S2102 and the step S2103 may be optional, and one or more of these steps may be omitted or replaced in different embodiments.

In some embodiments, the step S2101 and the step S2103 may be optional, and one or more of these steps may be omitted or replaced in different embodiments.

FIG. 3A is a schematic flowchart of an information processing method according to embodiments of the present invention. As shown in FIG. 3A, embodiments of the present invention relate to an information processing method, which is performed by a terminal, and includes the following steps.

In step S3101, data packet discarding at a high layer is determined.

Optional implementation manners of the step S3101 can refer to optional implementation manners of the step S2101 in FIG. 2 and other related parts in embodiments involved in FIG. 2, which will not be described again here.

In step S3102, it is determined to cancel a first operation for DSR.

For optional implementation manners of the step S3102, reference may be made to optional implementation manners of the step S2102 in FIG. 2 and other related parts in embodiments involved in FIG. 2, which will not be repeated here.

In some embodiments, the terminal determines to cancel the first operation for the DSR based on the data packet discarding at the high layer.

In some embodiments, the terminal determines to cancel sending of the DSR, cancel sending of an SR and/or cancel an RACH procedure based on the data packet discarding at the high layer.

In some embodiments, the terminal determines to cancel sending of an SR and/or cancel an RACH procedure in case of cancelling sending of the DSR, based on the data packet discarding at the high layer.

In step S3103, a timer is stopped.

In some embodiments, when the terminal cancels the SR, the terminal stops a prohibit timer of the SR; and/or when the terminal cancels the DSR, the terminal stops a timer associated with the DSR.

For optional implementation manners of the step S3103, reference may be made to optional implementation manners of the step S2103 in FIG. 2 and other related parts in embodiments involved in FIG. 2, which will not be repeated here.

The information processing method involved in embodiments of the present invention may include at least one of the steps S3101 to S3103. For example, the step S3101 may be implemented as an independent embodiment; the step S3102 may be implemented as an independent embodiment; the step S3103 may be implemented as an independent embodiment; the combination of the step S3101 and the step S3102 may be implemented as an independent embodiment; the combination of the step S3102 and the step S3103 may be implemented as an independent embodiment; the combination of the step S3102 to the step S3103 may be implemented as an independent embodiment.

In some embodiments, the step S3102 and the step S3103 may be optional, and one or more of these steps may be omitted or replaced in different embodiments.

In some embodiments, the step S3101 and the step S3103 may be optional, and one or more of these steps may be omitted or replaced in different embodiments.

FIG. 3B is a schematic flowchart of an information processing method according to embodiments of the present invention. As shown in FIG. 3B, embodiments of the present invention relate to an information processing method, which is performed by a terminal, and includes a following step.

In step S3201, it is determined to cancel a first operation for DSR.

For optional implementation manners of the step S3201, reference may be made to optional implementation manners of the step S2102 in FIG. 2 or the step S3102 in FIG. 3A, and other related parts in embodiments involved in FIG. 2 and FIG. 3A, which will not be repeated here.

In some embodiments, determining to cancel the first operation for the DSR includes: determining to cancel the first operation for the DSR based on data packet discarding at a high layer.

In some embodiments, the high layer includes: a PDCP layer and/or an RLC layer.

In some embodiments, cancelling the first operation for the DSR includes at least one of: cancelling sending of the DSR; cancelling sending of an SR; or cancelling an RACH procedure.

In some embodiments, cancelling the first operation for the DSR includes at least one of: cancelling sending of an SR in case of cancelling sending of the DSR; or cancelling an RACH procedure in case of cancelling sending of the DSR.

In some embodiments, the method further includes: stopping a prohibit timer of the SR when cancelling sending of the SR; and/or stopping a timer associated with the DSR when cancelling sending of the DSR. Optionally, the timer associated with the DSR includes at least one of: a prohibit timer, a retransmission timer, or a periodic timer.

In some embodiments, the method further includes: determining the data packet discarding at the high layer.

In some embodiments, determining the data packet discarding at the high layer includes: determining the data packet discarding at the high layer according to an inter-layer message; and the inter-layer message is sent by the high layer to a MAC layer. Optionally, the inter-layer message indicates that data to be transmitted or first characteristic data is discarded; and the first characteristic data is a subset of the data to be transmitted.

In some embodiments, the inter-layer message is sent after the data packet discarding at the high layer. For example, after packet loss occurs at the high layer, the terminal sends the inter-layer message to the MAC layer through the high layer.

In some embodiments, determining the data packet discarding at the high layer includes at least one of: detecting through a MAC layer that data to be transmitted or first characteristic data of a specific logical channel is discarded; or detecting through an MAC layer that data to be transmitted or first characteristic data of a specific logical channel group is discarded.

In some embodiments, determining to cancel the first operation for the DSR based on the data packet discarding at the high layer includes: determining, according to a protocol, that a function of data packet discarding is enabled for a logic channel corresponding to the high layer, and cancelling the first operation for the DSR when the data packet discarding at the high layer is detected.

The above embodiments may be implemented individually or in combination with each other. For optional implementation manners, reference may be made to optional implementation manners of the steps in FIG. 2 and FIG. 3A, which will not be repeated here.

FIG. 3C is a schematic flowchart of an information processing method according to embodiments of the present invention. As shown in FIG. 3C, embodiments of the present invention relate to an information processing method, which is performed by a terminal, and includes a following step.

In step S3301, data packet discarding at a high layer is determined.

For optional implementation manners of the step S3301, reference may be made to optional implementation manners of the step S2101 in FIG. 2 or the step S3101 in FIG. 3A, and other related parts in embodiments involved in FIG. 2 and FIG. 3A, which will not be repeated here.

The above embodiments may be implemented individually or in combination with each other. For optional implementation manners, reference may be made to optional implementation manners of the steps in FIG. 2 and FIG. 3A, which will not be repeated here.

Embodiments of the present invention relate to an information processing method, which includes any of the followings.

In some embodiments, the terminal cancels operations for triggered DSR and/or SR and/or RACH when the data packet discarding at the high layer is detected.

Optionally, cancelling operations for the triggered DSR and/or SR and/or RACH may be cancelling the first operation for the DSR as described in the above embodiments.

Optionally, when the terminal detects that a specific data packet or data packet set exists in a logical channel (LC) or a logical channel group (LCG), and determines that the remaining time of the specific data packet or data packet set is less than a predetermined threshold, the DSR will be reported. The specific data packet or data packet set may be considered as having first characteristic data; the DSR will carry the data volume of the first characteristic data.

Optionally, canceling the triggered SR may include: canceling a pending SR and stopping a prohibit timer of the SR.

Optionally, canceling the triggered RACH procedure may include that: the MAC entity cancels an ongoing RACH procedure, or cancel an RACH procedure corresponding to the triggered SR or pending SR.

In some embodiments, the data packet discarding at the high layer is detected by the terminal.

Optionally, the high layer may be a PDCP layer and/or an RLC layer.

Optionally, the high layer may send an inter-layer message to a MAC layer to notify that all data to be transmitted or the first characteristic data changes from presence to absence. For example, the high layer may send the inter-layer message to the MAC layer to notify that all data to be transmitted or the first characteristic data changes from presence to absence in a logical channel. Optionally, the logical channel may be a specific logical channel.

Optionally, after the PDCP layer performs batch discarding of data packets, the PDCP layer sends an inter-layer message to the MAC layer to notify that all data to be transmitted or the first characteristic data changes from presence to absence in the logical channel.

Optionally, the MAC layer detects that the amount of all data transmitted for the logical channel or logical channel group or the first characteristic data becomes 0.

In some embodiments, the terminal cancels the triggered DSR and/or SR and/or RACH when the data packet discarding at the high layer is detected.

Optionally, when uplink (UL) data of a logical channel becomes unavailable, the triggered DSR is cancelled. For example, the uplink data of the logical channel becomes unavailable, which may be that the uplink data of the logical channel is discarded.

Optionally, in a case where there is no uplink granted resource for uplink transmission, or there is an uplink granted resource, but a logical channel multiplexing rule is not satisfied, resulting in failure of the MAC CE transmission for the DSR, the DSR will trigger sending of the SR. If the terminal detects the data packet discarding at the high layer, the triggered SR will be canceled. Optionally, canceling the triggered SR may include: canceling a pending SR for the DSR and stopping a prohibit timer of the SR (if the prohibit timer is running). Here, when the triggered DSR is canceled, the triggered DSR triggers the SR, then the SR has been canceled.

Optionally, if the SR is triggered during reporting or sending of the DSR, but there is no valid PUCCH resource to send the SR, the RACH procedure is triggered. If the terminal detects the data packet discarding at the high layer, the triggered RACH procedure is canceled. Optionally, the MAC entity may cancel the ongoing RACH procedure (if there is such a RACH procedure). For example, the MAC entity will stop the RACH procedure corresponding to a triggered or pending SR, and the trigger of the SR is caused by the trigger of the DSR.

In some embodiments, when the terminal detects the data packet discarding at the high layer, the triggered DSR will be canceled; and the cancellation of the DSR will cause the SR and/or RACH procedure to be canceled.

Optionally, the triggered DSR may be cancelled when it is triggered for a logical channel whose UL data becomes not available (e.g., PDCP discarding).

Optionally, when the DSR that triggers the SR has already been cancelled, the triggered or pending SR for DSR is cancelled, and the prohibit timer of the SR is stopped.

Optionally, the MAC entity may cancel the ongoing RACH procedure, if the DSR that triggers the SR corresponding to the RACH procedure has already been cancelled.

In some embodiments, the protocol stipulates that cancelling operations for the triggered DSR and/or SR and/or RACH when the terminal detects the data packet discarding at the high layer is enabled by the terminal for the specific logical channel.

Optionally, if the network device enables the packet discarding function of a data packet (such as a PDU or PDU set of PDCP) for a certain logical channel or logical channel group, cancelling operations for the triggered DSR and/or SR and/or RACH when the terminal detects the data packet discarding at the high layer can be enabled for an uplink logical channel associated with the PDCP entity.

Optionally, it is assumed that discarding a packet renders the entire PDU set invalid.

Some examples are provided below:

### Example 1:

Optionally, when the data packet is discarded at the high layer or a logical channel is detected whose uplink data changes from present to absence, sending of the DSR is canceled.

### Example 2:

Optionally, when the data packet is discarded at the high layer or a logical channel is detected whose uplink data changes from present to absence, sending of DSR-triggered or pending SR is canceled, and the prohibit timer of the SR (if running) is stopped.

### Example 3:

Optionally, when the data packet is discarded at the high layer or a logical channel is detected whose uplink data changes from present to absence, the RACH procedure is canceled. For example, when the data packet is discarded at the high layer or a logical channel is detected whose uplink data changes from present to absence, sending of DSR-triggered or pending SR is canceled; and when the triggered or pending SR is canceled, the RACH procedure is canceled. For example, the MAC entity may cancel the ongoing RACH procedure.

### Example 4:

Optionally, when the data packet is discarded at the high layer or a logical channel is detected whose uplink data changes from present to absence, the RACH procedure is canceled. For example, when the data packet is discarded at the high layer or a logical channel is detected whose uplink data changes from present to absence, the MAC entity may cancel the ongoing RACH procedure. The ongoing RACH procedure is caused by the pending SR triggered by the DSR.

### Example 5:

Optionally, when the data packet is discarded at the high layer or a logical channel is detected whose uplink data changes from present to absence, and the DSR that triggers the SR is canceled, the DSR-triggered or pending SR is canceled; and the prohibit timer of the SR (if running) is stopped.

### Example 6:

Optionally, when the data packet is discarded at the high layer or a logical channel is detected whose uplink data changes from present to absence, and the DSR associated with the SR that triggers the RACH procedure is canceled, the RACH procedure is canceled; where the RACH procedure is caused by the SR triggered by the DSR.

In embodiments of the present invention, part or all of the steps and their optional implementation manners may be arbitrarily combined with part or all of the steps in other embodiments, and may also be arbitrarily combined with optional implementation manners of other embodiments.

Embodiments of the present invention further provide an apparatus for implementing any of the above methods. For example, an apparatus is provided, the apparatus includes one or more units or modules for implementing various steps performed by the terminal as described in any of the above methods. For another example, another apparatus is also proposed, which includes one or more units or modules for implementing various steps performed by the network device (such as an access network device, a core network function node, a core network device, etc.) as described in any of the above methods.

It should be understood that the division of the units in the above apparatuses is only a division of logical functions, and all or part of these units may be integrated into one physical entity or may be physically separated as required in implementation. In addition, the units in the apparatus may be implemented in the form of processor calling software, for example, the apparatus includes a processor, the processor is connected to a memory, computer instructions are stored in the memory, and the processor calls the computer instructions stored in the memory to implement any of the above methods or implement the functions of various units of the above apparatus. The processor is, for example, a general-purpose processor, such as a central processing unit (CPU) or a microprocessor, and the memory is a memory inside or outside the apparatus. Alternatively, the units in the apparatus may be implemented in the form of hardware circuit, and the hardware circuit may be designed to implement the functions of some or all of the units. The above hardware circuit may be understood as one or more processors. For example, in an implementation, the above hardware circuit is an application-specific integrated circuit (ASIC), and the functions of some or all of the above units are realized by designing the logical relationship of components in the circuit. For example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units. All units of the above apparatus may be realized in the form of processor calling software or in the form of hardware circuit, or a part of them may be realized in the form of processor calling software, and the rest may be realized in the form of hardware circuit.

In embodiments of the present invention, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the hardware circuit is fixed or reconfigurable. For example, the processor is a hardware circuit implemented by an application-specific integrated circuit (ASIC) or a programmable logic device (PLD), such as FPGA. In a reconfigurable hardware circuit, the processor loads a configuration file to implement the process of hardware circuit configuration, which may be understood as a process where the processor loads instructions to implement the functions of some or all of the above units. In addition, it may also be a hardware circuit designed for artificial intelligence, which may be understood as an ASIC, such as a neural network processing unit (NPU), a tensor processing unit (TPU), a deep learning processing unit (DPU), etc.

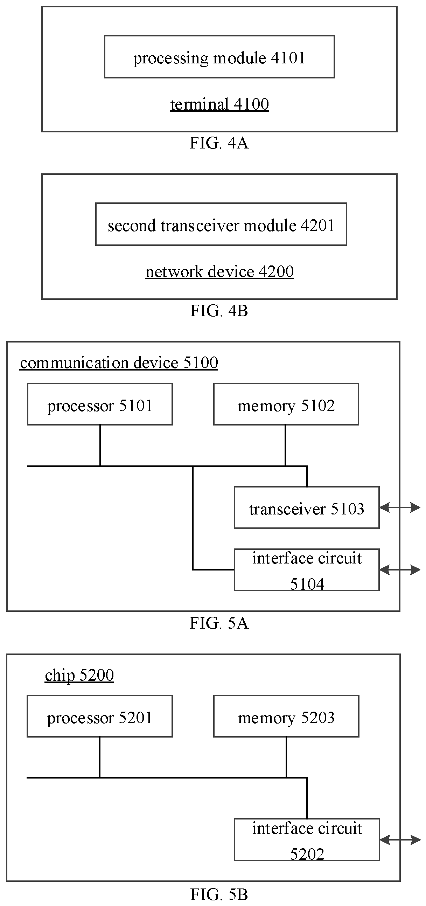

FIG. 4A is a schematic block diagram of a terminal according to embodiments of the present invention. As shown in FIG. 4A, the terminal 4100 includes: a processing module 4101. In some embodiments, the processing module 4101 is configured to determine to cancel a first operation for DSR. Optionally, the processing module 4101 is configured to perform at least one of the processing steps (such as the step S2101, the step S2102 and/or the step S2103, but not limited thereto) executed by the terminal in any of the above methods, which will not be repeated here. Optionally, the terminal 4100 also includes a first transceiver module; and the first transceiver module is configured to perform at least one of receiving and/or sending steps executed by the terminal in any of the above methods, which will not be repeated here.

FIG. 4B is a schematic block diagram of a network device according to embodiments of the present invention. As shown in FIG. 4B, the network device 4200 includes: a second transceiver module 4201. In some embodiments, the second transceiver module 4201 is configured to send first information. Optionally, the second transceiver module 4201 is configured to perform at least one of of receiving and/or sending steps performed by the terminal in any of the above methods, which will not be repeated here.

FIG. 5A is a schematic diagram of a communication device 5100 according to embodiments of the present invention. The communication device 5100 may be a network device (e.g., an access network device, a core network device, etc.), or a terminal, or a chip, chip system or processor that supports a network device to implement any of the above methods, or a chip, chip system or processor that supports a terminal to implement any of the above methods. The communication device 5100 may be configured to implement the method described in the above method embodiments, and for details, reference may be made to the description in the above method embodiments.

As shown in FIG. 5A, the communication device 5100 includes one or more processors 5101. The processor 5101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. The processor 5101 is configured to call instructions to cause the communication device 5100 to perform any of the above methods.

In some embodiments, the communication device 5100 further includes one or more memories 5102 for storing instructions. Optionally, all or part of the memories 5102 may also be set outside the communication device 5100.

In some embodiments, the communication device 5100 further includes one or more transceivers 5103. In a case where the communication device 5100 includes one or more transceivers 5103, the communication steps, such as sending and receiving steps, in the above methods are performed by the transceiver 5103, and at least one of the other steps are performed by the processor 5101.

In some embodiments, the transceiver may include a receiver and a transmitter, and the receiver and the transmitter may be separate or integrated together. Optionally, the terms such as transceiver, transceiver unit, transceiver machine, transceiver circuit, etc. are interchangeable, the terms such as transmitter, transmitting unit, transmitting machine, transmitting circuit, etc. are interchangeable, and the terms such as receiver, receiving unit, receiving machine, receiving circuit, etc. are interchangeable.

Optionally, the communication device 5100 further includes one or more interface circuits 5104, which are connected to the memory 5102. The interface circuit 5104 may be configured to receive signals from the memory 5102 or other devices, and send signals to the memory 5102 or other devices. For example, the interface circuit 5104 may read instructions stored in the memory 5102 and send the instructions to the processor 5101.

The communication device 5100 described in the above embodiments may be a network device or a terminal, but the scope of the communication device 5100 described in the present invention is not limited thereto, and the structure of the communication device 5100 may not be limited by FIG. 5A. The communication device may be a stand-alone device or may be part of a larger device. For example, the communication device may be: 1) a stand-alone integrated circuit (IC), a chip, or a chip system or subsystem; (2) a set of one or more ICs, optionally, the set of ICs may also include a storage component for storing data and computer programs; (3) an ASIC, such as a Modem; (4) a module that may be embedded in other devices; (5) a receiver, a terminal, an intelligent terminal, a cellular phone, a wireless device, a handheld machine, a mobile unit, a vehicle-mounted device, a network device, a cloud device, an artificial intelligence device, etc.; (6) others.

FIG. 5B is a schematic diagram of a chip 5200 according to embodiments of the present invention. In the case where the communication device 5100 may be a chip or chip system, reference may be made to the schematic diagram of the chip 5200 shown in FIG. 5B, but the present invention is not limited thereto.

The chip 5200 includes one or more processors 5201, and is configured to perform any of the above methods.

In some embodiments, the chip 5200 further includes one or more interface circuits 5202, the interface circuit 5202 is connected to the memory 5203, the interface circuit 5202 may be used to receive signals from the memory 5203 or other devices, and the interface circuit 5202 may be used to send signals to the memory 5203 or other devices. For example, the interface circuit 5202 may read the instructions stored in the memory 5203 and send the instructions to the processor 5201.

In some embodiments, the interface circuit 5202 is configured to perform at least one of the communication steps such as sending and/or receiving steps in the above method, and the processor 5201 is configured to perform at least one of the other steps.

In some embodiments, the terms such as interface circuit, interface, transceiver pin, transceiver, etc. are interchangeable.

In some embodiments, the chip 5200 further includes one or more memories 5203 for storing instructions. Optionally, all or part of the memories 5203 may be set outside the chip 5200.

The present invention also provides a storage medium having stored therein instructions that, when run on the communication device 5100, cause the communication device 5100 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a temporary storage medium.

The present invention also provides a program product that, when executed by the communication device 5100, causes the communication device 5100 to perform any of the above methods. Optionally, the program product is a computer program product.

The present invention also provides a computer program that, when run on a computer, causes the computer to execute any one of the above methods.

## Claims

1. An information processing method, comprising:
determining, by a terminal, to cancel a first operation for delay status reporting (DSR).

2. The method according to claim 1, wherein determining to cancel the first operation for the DSR comprises:
determining to cancel the first operation for the DSR based on data packet discarding at a high layer.

3. The method according to claim 2, wherein the high layer comprises at least one of:
a packet data convergence protocol (PDCP) layer; or
a radio link control (RLC) layer.

4. The method according to any one of claims 1 to 3, wherein cancelling the first operation for the DSR comprises at least one of:
cancelling sending of the DSR;
cancelling sending of a scheduling request (SR); or
cancelling a random access channel (RACH) procedure.

5. The method according to any one of claims 1 to 3, wherein cancelling the first operation for the DSR comprises at least one of:
cancelling sending of a scheduling request (SR) in case of cancelling sending of the DSR; or
cancelling a random access channel (RACH) procedure in case of cancelling sending of the DSR.

6. The method according to claim 4 or 5, further comprising at least one of:
stopping a prohibit timer of the SR when cancelling sending of the SR; or
stopping a timer associated with the DSR when cancelling sending of the DSR.

7. The method according to any one of claims 2 to 6, further comprising: determining the data packet discarding at the high layer.

8. The method according to claim 7, wherein determining the data packet discarding at the high layer comprises:
determining the data packet discarding at the high layer according to an inter-layer message; wherein the inter-layer message is sent by the high layer to a media access control (MAC) layer.

9. The method according to claim 8, wherein the inter-layer message is sent after the data packet discarding at the high layer.

10. The method according to claim 7, wherein determining the data packet discarding at the high layer comprises at least one of:
detecting through a media access control (MAC) layer that data to be transmitted or first characteristic data of a specific logical channel is discarded; or
detecting through an MAC layer that data to be transmitted or first characteristic data of a specific logical channel group is discarded.

11. The method according to claim 2, wherein determining to cancel the first operation for the DSR based on the data packet discarding at the high layer comprises:
determining, according to a protocol, that a function of data packet discarding is enabled for a logic channel corresponding to the high layer, and cancelling the first operation for the DSR when the data packet discarding at the high layer is detected.

12. A terminal, comprising:
a processing module, configured to determine to cancel a first operation for delay status reporting (DSR).

13. A terminal, comprising one or more processors and configured to perform the information processing method according to any one of claims 1 to 11.

14. A storage medium, having stored therein instructions that, when run on a communication device, cause the communication device to perform the information processing method according to any one of claims 1 to 11.
